Europäisches Patentamt

European Patent Office

Office européen des brevets

(11) Veröffentlichungsnummer: **0 289 718**
**A2**

(12) **EUROPÄISCHE PATENTANMELDUNG**

(21) Anmeldenummer: 88102465.7

(22) Anmeldetag: 19.02.88

(51) Int. Cl.⁴: **F24D 11/02 , F24J 3/08**

(30) Priorität: 04.05.87 PL 265490

(43) Veröffentlichungstag der Anmeldung:
09.11.88 Patentblatt 88/45

(84) Benannte Vertragsstaaten:
**BE DE FR GB**

(71) Anmelder: **INSTYTUT TECHNIKI BUDOWLANEJ**
**ul. Filtrowa**
**Warszawa(PL)**

(72) Erfinder: **Weglarz, Marian**
**ul. Asfaltowa 11 m 18**
**Warszawa(PL)**

(74) Vertreter: **Finck, Dieter et al**
**Patentanwälte v. Füner, Ebbinghaus, Finck**
**Mariahilfplatz 2 & 3**
**D-8000 München 90(DE)**

(54) Verfahren und System zur Ausnutzung der Niedrigtemperaturenergie der geothermischen Wärme aus den Abbauräumen einer Grube.

(57) Die Erfindung löst die Frage der Ausnutzung der Niedrigtemperaturenergie der geothermischen Wärme zur Beheizung der Wohnungen und des Wassers für Brauchzwecke.

Das erfindungsgemäße Verfahren zur Ausnutzung der Niedrigtemperaturenergie der geothermischen Wärme aus den Abbauräumen einer Grube besteht darin, daß die im Wasser, im Gebirge und in dem Versatzgut der Abbauräume der außerbetriebgenommenen und der arbeitenden Gruben enthaltene geothermische Niedrigtemperaturenergie über Schlangen entnommen und zu den beheizten Räumen über ein aus Leitungen, einer Wärmepumpe, einem Akkumulationsspeicher und einer Wärmeverteilung zusammengesetztes System übertragen wird, wobei in einem Teil des geschlossenen Kreislaufsystems als Medium das Wasser und in dem anderen Teil - eine Salzwasserlösung verwendet wird.

Das System ist dadurch gekennzeichnet, daß die Schlangen (2) in dem Versatzgut oder im Gebirge des Abbauraumes (1) angeordnet und über Leitungen mit der Wärmepumpe (3) und dann mit dem Wärmeakkumulationsspeicher (5) verbunden sind, wobei in den außerbetriebgenommenen Gruben, insbesondere in tiefen Gruben, die Wärmepumpe (3), der Wärmeakkumulationsspeicher (4) und die Wärmeverteilung vorzugsweise unter Tage und in arbeitenden Gruben sowie in den Abbauräumen flacher Gruben die Wärmepumpe (3) und der Akkumulationsspeicher (4) vorzugsweise in dem Abbauraum (1) und die Wärmeverteilung (5) auf der Erdfläche angeordnet wird.

Fig. 1

## Verfahren und System zur Ausnutzung der Niedrigtemperaturenergie der geothermischen Wärme aus den Abbauräumen einer Grube

Die Erfindung betrifft ein Verfahren und eine Vorrichtung zur Ausnutzung der Niedrigtemperaturenergie der geothermischen Wärme aus den Abbauräumen einer Grube.

Die Erfindung findet Anwendung für Heizzwecke, insbesondere zur Beheizung der Wohnungen und des Wassers für Brauchzwecke.

Es sind Verfahren zur Ausnutzung der geothermischen Energie aus niedrigen Tiefen, z.B. vom Bodengrund mit einer Temperatur im Winter von 277 K bis 278 K von Seewasser und von anderen Gewässern mit einer Temperatur von 279 bis 281 K, von Grundwasser auf einer Tiefe bis ca. 20 m mit einer Wintertemperatur von 281 bis 283 K und von Tiefbrunnenwasser bis 150 m Tiefe mit einer Temperatur von 285 K bis 288 K bekannt.

Diese Verfahren bestehen in der Anordnung von Wärmetauschern auf geringer Tiefe im Bodengrund, z.B. des in der polnischen Patentschrift Nr. 119749 beschriebenen Austauschers, bzw. in der Gewinnung der Wärme aus geschöpftem Grundwasser, dessen Temperatur höher ist als die der Bodenfläche.

Außerdem ist in der westdeutschen Patentschrift Nr. 3022624 eine Lösung zur Ausnutzung kleiner Gewässer zur Gewinnung der Wärmeenergie beschrieben. Die westdeutsche Patentschrift Nr. 3005132 stellt eine Wärmepumpe vor, die die geothermische Wärmeenergie ausnutzt.

Auch die Patentschrift der USA Nr. 4375831 stellt ein System zur Ausnutzung der geothermischen Wärme vor. Alle dargestellten bekannten Lösungen enthalten keinen Hinweis auf ein Verfahren zur Ausnutzung der Wärmeenergie der Gruben.

Das Ziel der Erfindung ist es, ein Verfahren und ein System zur Beheizung von Bauobjekten, insbesondere von Wohnungsgebäuden durch Ausnutzung der natürlichen geothermischen Energie aus den Gruben zu entwickeln.

Das Wesen der Erfindung besteht in de Ausnutzung jeder Art Abbauräume von Gruben sowie der im geschlossenen Kreislauf arbeitenden Wärmepumpen zur Gewinnung der geothermischen Wärme.

Das erfindungsgemäße Verfahren zur Gewinnung der Niedrigtemperaturenergie der geothermischen Wärme aus den Abbau räumen von Gruben besteht darin, daß die im Wasser, im Gebirge und im Versatzgut der Abbauräume der außerbetriebgenommenen und der arbeitenden Gruben enthaltene geothermische Niedrigtemperaturenergie über Schlangen entnommen und zu den beheizten Räumen mittels eines Systems übertragen wird, das aus Leitungen, einer Wärmepumpe, einem Akkumulationsspeicher und einer Wärmeverteilung zusammengesetzt ist.

Das erfindungsgemäße System zur Ausnutzung der Niedrigtemperaturenergie der geothermischen Wärme aus den Abbauräumen von Gruben ist dadurch gekennzeichnet, daß die Schlangen zur Entnahme der geothermischen Niedrigtemperatur-Wärmeenergie in dem Versatzgut oder in dem Gebirge des Abbauraumes angeordnet und über Leitungen mit einer im geschlossenen Kreislauf arbeitenden Wärmepumpe und dann mit dem Wärmeakkumulationsspeicher und der Wärmeverteilung verbunden sind. Als Wärmeträger zur Entnahme der geothermischen Niedrigtemperaturenergie direkt vom Abbauraum wird Wasser oder eine Salzwasserlösung eingesetzt, die in einem Teil des geschlossenen, aus Schlangen, Wärmepumpe und Akkumulationsspeicher bestehenden Systems fließt. Der Wirkungsgrad des erfindungsgemäßen Systems ist besonders hoch, weil die Temperatur am Eintritt der Wärmepumpe hoch und konstant, d.h. von den atmosphärischen Bedingungen und der Jahreszeit unabhängig ist. Diese Temperatur beträgt je nach Tiefe 298 K und mehr. Die aus der Wärmepumpe gewonnene Wärmeenergiemenge ist dagegen fast doppelt so hoch wie die zum Antrieb der Pumpe verbrauchte Energie. Die Ausnutzung der bestehenden Abbauräume von Gruben reduziert die Kosten der Anlage bezogen auf andere Lösungen um die Kosten der Ausführung von Tiefbrunnen, Kosten der Eingrabung der Rohre unter der Bodenfläche usw. Das System zur Gewinnung der geothermischen Wärme "Abbauraum einer Grube - Wärmepumpe" ist für die Bergbaugeländo besonders günstig, auch hinsichtlich des Umweltschutzes. Zur Erzeugung von 1 kWh der Wärmeenergie würde dabei nur 0,150 kg der Steinkohle anstelle von 0,477 kg bei der traditionellen Erzeugung der elektrischen Energie oder anstelle von 0,280 kg bei der traditionellen Wärmeerzeugung in einem Fernheizkraftwerk verbraucht. Es wird also die Wärmeenergie in dem erfindungsgemäßen System bei niedrigerem Brennstoffverbrauch erreicht - im ersten Fall um 66% und im zweiten - um über 53%.

Bei Speicherung der Wärmeenergie für 12-15 Stunden kann die Hauptstromentnahme zum Antrieb der Wärmepumpe auf die Zeit außerhalb der Stromentnahmespitzen beschränkt werden, insbesondere auf die Nachtstunden, wodurch weitere positive energetische Effekte erzielt werden.

Der Erfindungsgegenstand wird nachstehend anhand eines in der Zeichnung dargestellten Ausführungsbeispieles näher erläutert, wobei die einzelnen Figuren zeigen:

Fig. 1 -ein Schema des in tiefen Gruben unter Tage ange ordneten Systems zur Gewinnung der geothermischen Wärme aus dem Gebirge und dem Versatzgut,

Fig. 2 -Schema eines auf der Erdfläche angeordneten Systems zur Gewinnung der Wärme aus den außerbetriebgenommenen Abbauräumen von Gruben.

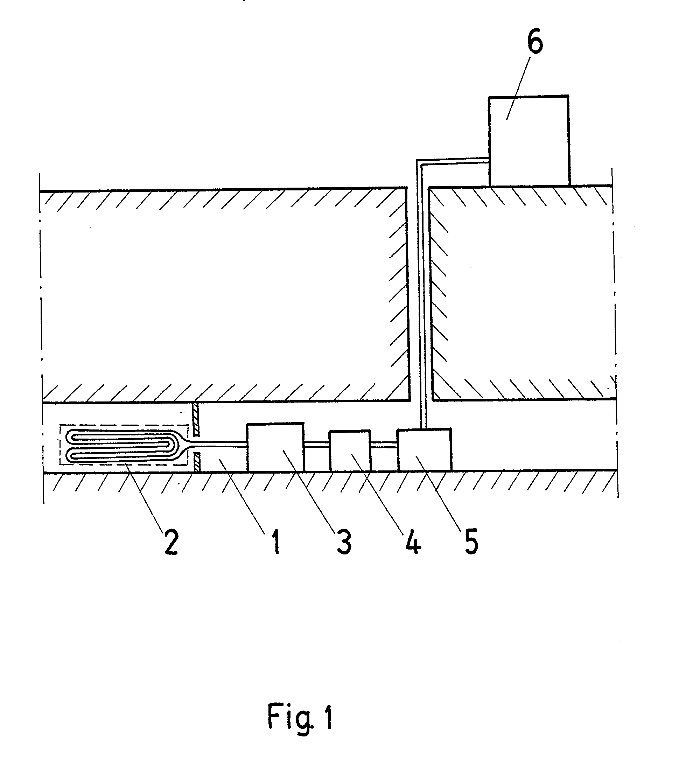

Das System zur Gewinnung der geothermischen Niedrigtemperatur-Wärmeenergie und zu deren Übertragung und Ausnutzung für Heizzwecke gemäß Fig. 1 besteht aus Schlangen 2, die aus Rohren, vorzugsweise aus Kunststoffrohren ausgeführt wird, die direkt in dem Abbauraum 1 in dem Versatzgut untergebracht werden. Die Schlangen 2 sind mit einer im geschlossenen Kreislauf arbeitenden Wärmepumpe 3 und einem Wärmeakkumulationsspeicher 4 sowie einer Wärmeverteilung 5 verbunden. Die Schlangen 2, die Wärmepumpe 4 samt Austauscher, der Akkumulationsspeicher 4 und die Wärmeverteilung 5 bilden Teile eines geschlossenen Niederdrucksystems, in welchem als Medium zur Entnahme und Übertragung der Wärmeenergie Wasser oder eine Salzwasserlösung verwendet wird. Diese Teil des Systems wird direkt in dem Abbauraum 1 der Grube untergebracht. Die Wärmeverteilung 5 wird über Hochdruckleitungen mit dem Wärmeverbraucher 6 verbunden und bildet den Teil des Systems zur Übertragung der geothermischen Niedrigtemperaturwärmeenergie im geschlossenen Kreislauf, in welchem als Medium zur Wärmeenergieübertragung Wasser eingesetzt wird.

Das oben beschriebene System eignet sich insbesondere zur Gewinnung der Wärme für Heizwecke aus den außerbetriebgenommenen Gruben.

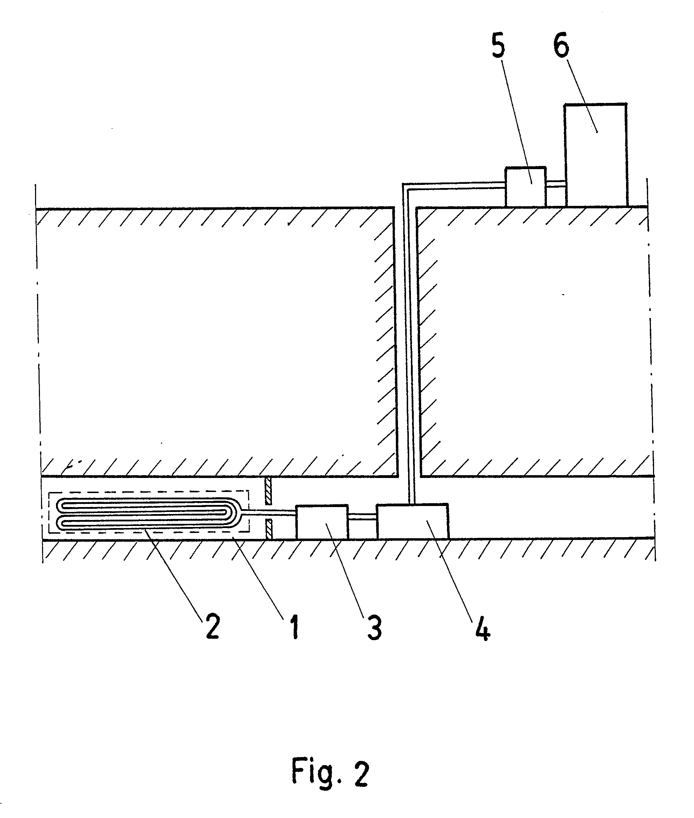

Das System gemäß Fig. 2 besteht aus den gleichen Bestandteilen wie das von Fig. 1, wobei die Schlangen 2, die Wärmepumpe 3 und der Wärmeakkumulationsspeicher 4 in dem Abbauraum 1 der Grube und die Wärmeverteilung 5 auf der Erdoberfläche angeordnet ist. Als Übertragungsmedium für die Wärmeenergie wird hier Wasser eingesetzt.

Das oben beschriebene System eignet sich insbesondere zur Gewinnung der Wärme für Heizzwecke aus den arbeitenden Gruben sowie aus den Abbauräumen tiefer Gruben.

## Ansprüche

1. Verfahren zur Ausnutzung der Niedrigtemperaturenergie der geothermischen Wärme aus den Abbauräumen einer Grube, dadurch gekennzeichnet, daß die in dem Wasser, in dem Gebirge und im Versatzgut der bereits außerbetriebgenommenen und der arbeitenden Gruben enthaltene geothermische Niedrigtemperaturwärmeenergie über Schlangen entnommen und zu den beheizten Räumen über ein System übertragen wird, das aus Leitungen, einer Wärmepumpe, einem Akkumulationsspeicher und einer Wärmeverteilung zusammengesetzt ist, wobei in einem Teil des geschlossenen Kreislaufsystems als Medium Wasser und im anderen Teil eine Salzwasserlösung eingesetzt wird.

2. System zur Ausnutzung der Niedrigtemperaturenergie der geothermischen Wärme aus den Abbauräumen einer Grube, dadurch gekennzeichnet, daß die Schlangen (2) in dem Versatzgut oder in dem Gebirge des Abbauraumes (1) untergebracht und über Leitungen mit der Wärmepumpe (3) und dann mit dem Wärmeakkumulationsspeicher (4) und der Wärmeverteilung (5) verbunden sind, wobei in den außerbetriebgenommenen Gruben, insbesondere in tiefen Gruben die Anordnung der Wärmepumpe (3), des Wärmeakkumulationsspeichers (4) und der Wärmeverteilung (5) unter Tage vorteilhaft ist.

3. System nach Anspruch 2, dadurch gekennzeichnet, daß in den arbeitenden Gruben und in den Abbauräumen flacher Gruben die Wärmepumpe (3) und der Wärmeakkumulationsspeicher (4) vorzugsweise in den Abbauräumen (1) und die Wärmeverteilung (5) auf der Erdfläche angeordnet sind.

4. System nach Anspruch 2, dadurch gekennzeichnet, daß als Medium zur Entnahme der geothermischen Niedrigtemperaturwärmeenergie direkt aus den Abbauräumen die Salzwasserlösung verwendet wird, die in einem Teil eines geschlossenen Kreislaufsystems fließt, das aus Schlangen (2), einer Wärmepumpe (3), einem Akkumulationsspeicher (4) zusammengesetzt und direkt in dem Abbauraum (1) angeordnet ist.

Fig. 1

Fig. 2